# EUROPÄISCHE PATENTANMELDUNG

(11) **EP 0 844 549 A1**
(43) Veröffentlichungstag der Anmeldung: **27.05.1998**
(21) Anmeldenummer: 97119971.6
(22) Anmeldetag: 14.11.1997
(51) Int. Cl.: G06F 1/00

(54) **Verfahren zum Schutz von Software**

(30) Priorität: 22.11.1996 EP 96810819
(71) Anmelder: Endress + Hauser Wetzer GmbH + Co. KG, D-87484 Nesselwang (DE)
(72) Erfinder: Umkehrer, Alfred, Dipl. Ing. (TU), 87659 Hopferau (DE)
(74) Vertreter: Morstadt, Volker, Dipl.-Ing. c/o Endress + Hauser Flowtec AG

(57) **Zusammenfassung**

Das Verfahren verhindert die unerlaubte Benutzung der von einem Hersteller stammenden Software (sw), die aufgrund einer vom ihm erteilten Einzel-Benutzungserlaubnis für die jeweilige Elektroniksteuerung von gleichen, von ihm stammenden Geräten (g₁; g_{z}) eines Besitzers verwendbar ist. Die Software ist in einem Computer (pc) des Besitzers installiert und verarbeitet von den Geräten stammende Daten (d), die. Jedem Gerät wird vom Hersteller ein individuelles Identifikationswort (iw₁; iw_{z}) zugeordnet und in einem nichtflüchtigen Gerät-Speicher (m₁; m_{z}) abgelegt. Mittels eines Hersteller-Prozessors (pz) wird aus dem Identifikationswort ein Schlüsselwort (kw₁; kw_{z}) gebildet, in das ein Benutzungserlaubniswort einbezogen sein kann, und im Gerät-Speicher abgelegt. Beide Wörter werden in einer Datenbank (db_{b}) des Geräte-Besitzers und in einer Datenbank (dbₕ) des Software/Geräte-Herstellers aufgelistet. Bei jeder Geräte-Inbetriebnahme überprüft die Software, ob das im Speicher abgelegte Identifikationswort in der Besitzer-Datenbank vorhanden ist. Wenn dies zutrifft wird geprüft, ob darin das zum Identifikationswort gehörende Schlüsselwort vorhanden ist. Wenn dagegen das Identifikationswort darin nicht vorhanden oder wenn das darin vorhandene Schlüsselwort falsch ist, wird geprüft, ob im Gerät-Speicher ein richtiges Schlüsselwort abgelegt ist. Wenn dies zutrifft, legt die Software die beiden Wörter in der Besitzer-Datenbank ab und gibt die Daten-Verarbeitung sowie die Elektroniksteuerung frei, wenn dies dagegen nicht zutrifft, erstellt die Software eine Fehlliste (fl) und gibt die Daten-Verarbeitung und die Elektroniksteuerung nicht frei.

## Beschreibung

Die Erfindung betrifft ein Verfahren zum Schutz einer von einem Hersteller stammenden Software gegen unerlaubte Benutzung.

In der US-A 55 02 831 ist ein Verfahren zum Schutz von von einem Hersteller stammenden gleichartigen Empfangsgeräten (dort als communication units bezeichnet) eines Kommunikationssystems gegen unerlaubte Modifizierungen beschrieben, welche Empfangsgeräte mehrere Elektronik-Untereinheiten (dort als operational platforms bezeichnet), z.B. Platten mit gedruckten Schaltungen oder Trägermodule für die Gesamtschaltung (dort als assembly modules supporting the circuitry bezeichnet), umfassen, die ihrerseits für die Funktion der Empfangsgeräte erforderliche Teilsoftware, z.B. für einen digitalen Signalprozessor oder für einen Verschlüsselungs/Entschlüsselungs-Prozessor, enthalten, welches Verfahren folgende Schritte umfaßt:
- jeder Elektronik-Untereinheit und jeder Teilsoftware wird vom Hersteller ein eigenes Untereinheit-Identifikationswort (dort als unit platform identification code bezeichnet) und ein eigenes Teilsoftware-Identifikationswort (dort als serial number of software program bezeichnet) zugeordnet,
- aus den Untereinheit-Identifikationswörtern eines Empfangsgeräts werden ein Elektronik-Identifikationswort (dort als communication unit's hardware identification code bezeichnet), aus den Teilsoftware-Identifikationswörtern desselben Empfangsgeräts ein Software-Identifikationswort (dort als communication unit's software identification code bezeichnet) gebildet und aus dem Elektronik- sowie dem Teilsoftware-Identifikationswort ein Geräte-Identifikationswort (dort als assembly code for the communication unit identification code bezeichnet) gebildet und diese in einem nichtflüchtigen Speicher des Empfangsgeräts gespeichert,
- die Geräte-Identifikationswörter werden laufend zu einer Datenbank des Herstellers der Empfangsgeräte übertragen und dort aufgelistet, und
- bei jeder Modifikation eines Empfangsgeräts wird diese aufgrund des durch die Modifikation veränderten Geräte-Identifikationsworts erkannt.

Bei diesem Verfahren geht es im Gegensatz zum Verfahren der Erfindung also lediglich um das Erkennen und Melden von nicht erlaubten Manipulationen an Empfangsgeräten des Kommunikationssystems, wobei der Verschlüsselungs/Entschlüsselungs-Prozessor offensichtlich nicht in den Schutz gegen unerlaubte Modifizierungen einbezogen ist.

Demgegenüber ist es ein Ziel der Erfindung, daß eine von einem Hersteller geschaffene Software, also ein sogenanntes Software-Paket, von einem Erwerber nur zusammen mit demjenigen Gerät desselben Herstellers benutzbar sein soll, mit dem zusammen und für das sie/es erworben worden ist. Es soll also dem Besitzer von Gerät und Software-Paket nicht möglich sein, weitere gleichartige Geräte ohne die Verpflichtung zu erwerben, auch das für jedes weitere Gerät erforderliche Software-Paket erwerben zu müssen.

Die Erfindung geht von dem Grundgedanken aus, daß sich diese Verpflichtung nur durchsetzen läßt, wenn das System sie von selbst erzwingt, und erreicht dies dadurch, daß ein zu einem erworbenen Gerät passendes Software-Paket zusammen mit einem anderen Gerät nicht funktionsfähig ist, sondern es erst wird, wenn eine weitere Benutzungserlaubnis erworben worden ist.

Somit besteht die Erfindung in einem Verfahren zum Schutz einer von einem Hersteller stammenden Software gegen unerlaubte Benutzung, welche Software
- aufgrund einer vom Hersteller erteilten Einzel-Benutzungserlaubnis für eine Elektroniksteuerung eines einzelnen von gleichartigen, vom Hersteller stammenden Geräten eines Besitzers verwendbar ist,
- in einem Computer des Besitzers installiert ist und
- einer Verarbeitung von Daten dient, die von den Geräten stammen,
   welches Verfahren folgende Schritte umfaßt:
- jedem Gerät wird vom Hersteller ein individuelles Identifikationswort zugeordnet, das sich von den jeweiligen Identifikationswörtern aller anderen Geräte unterscheidet;
- das jeweilige Identifikationswort wird in einem nichtflüchtigen Speicher des jeweiligen Geräts gespeichert;
- vom Hersteller wird mittels eines Prozessors aus dem jeweiligen Identifikationswort anhand eines nur ihm bekannten Verschlüsselungs-Algorithmus ein Schlüsselwort gebildet und im Speicher des jeweiligen Gerätes gespeichert;
- die Identifikationswörter werden zusammen mit dem zugehörigen jeweiligen Schlüsselwort in einer Datenbank des Besitzers der Geräte und in einer Datenbank des Herstellers der Software und der Geräte aufgelistet;
- bei jeder Inbetriebnahme eines der Geräte überprüft die Software,
   -- ob das im Speicher dieses Geräts abgelegte Identifikationswort in der Datenbank des Besitzers vorhanden ist,
   -- wenn dies zutrifft, ob in der Datenbank des Besitzers das zu diesem Identifikationswort gehörende Schlüsselwort vorhanden ist,
   -- wenn dagegen das Identifikationswort in der Datenbank des Besitzers nicht vorhanden oder wenn das in der Datenbank des Besitzers vorhandene Schlüsselwort falsch ist, ob im Speicher des Geräts ein richtiges Schlüsselwort abgelegt ist;
- trifft dies zu, legt die Software das Schlüsselwort zusammen mit seinem zugehörigen Identifikationswort in der Datenbank des Besitzers ab und gibt die Elektroniksteuerung des Gerätes und die Verarbeitung der Daten frei;
- trifft dies dagegen nicht zu, erstellt die Software eine Fehlliste derjenigen Identifikationswörter, zu denen jeweils ein falsches Schlüsselwort gehört, und gibt die Elektroniksteuerung des Gerätes und die Verarbeitung der Daten nicht frei.

Nach einer Weiterbildung der Erfindung wird in das Schlüsselwort ein Benutzungserlaubniswort aufgenommen.

Nach einer Ausgestaltung der Erfindung wird zwischen den Geräten und dem Computer eine serielle und/oder parallele Schnittstelle vorgesehen.

Nach einer anderen Ausgestaltung der Erfindung wird zwischen den Geräten und dem Computer eine manuell gesteuerte Datenübernahme aus den Geräten in ein Hilfsgerät vorgesehen.

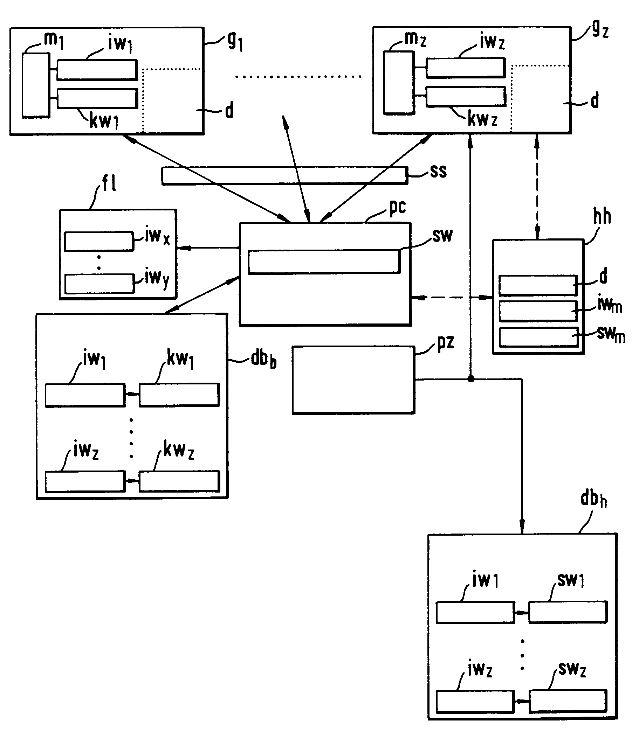

Die Erfindung wird nun anhand der Figur der Zeichnung näher erläutert, die nach Art eines Blockschaltbilds das Zusammenwirken einzelner Komponenten beim Ablauf des Verfahrens der Erfindung veranschaulicht.

In der Figur sind von einer beliebigen Anzahl von untereinander gleichartigen, insb. gleichen, Geräten, z.B. Meßgeräten oder Registriergeräten, ein erstes Gerät g₁ und ein letztes Gerät g_{z} dargestellt. Die Geräte stammen von ein und demselben Hersteller und befinden sich zur Nutzung und Verwendung bei ein und demselben Besitzer.

Zum Lieferumfang der Geräte gehört auch eine Software sw, die der Hersteller der Geräte vollständig selbst geschaffen oder durch Bearbeitung von Standard-Software auf die Anwendung zusammen mit den Geräten zugeschnitten hat. Die Software sw läuft auf einem Computer pc des Besitzers der Geräte und dient u.a. deren Elektroniksteuerung.

Im Rahmen dieser Steuerung erlaubt die Software z.B. einen Austausch von Daten d zwischen den Geräten und dem Computer. Die Daten d werden von jedem Gerät aufgrund von irgendwelchen Messungen, z.B. einer Messung von Druck, pH-Wert, Temperatur, Durchfluß oder Gasen etc., erzeugt.

Das Zusammenwirken des Computers pc mit den Geräten kann z.B. über eine serielle und/oder eine parallele Schnittstelle ss, also eine dauernde Leitungsverbindung, erfolgen, die in der Figur durch ausgezogene Zwei-Richtungspfeile veranschaulicht ist.

Eine andere Möglichkeit der Datenverbindung zwischen den Geräten und dem Computer pc ist in der Figur ebenfalls, jedoch mittels gestrichelt gezeichneter Zwei-Richtungspfeile dargestellt: In ein Hilfsgerät hh mit einem schreib- und lesbaren Datenträger, wie z.B. ein Casettenrecorder, werden die Daten d aus den Geräten vor Ort durch manuelle Betätigung eingelesen. Danach wird das Hilfsgerät hh an den Ort des Computers pc gebracht, und dort werden die Daten d in ihn über eine geeignete Verbindung eingelesen.

Die Daten d können durch den Computer pc mittels der Software sw zu einer Anzeige der Meßwerte verarbeitet werden..

Der Hersteller der Geräte und der eigengeschaffenen Software hat ein Interesse daran, daß "seine" Software nur gegen Bezahlung benutzt wird, daß sie also nur mit demjenigen Gerät benutzt werden kann, mit dem zusammen und für das sie vom Besitzer des Geräts erworben worden ist.

Eine unerwünschte und somit aus der Sicht des Herstellers unerlaubte Benutzung der Software sw liegt somit schon dann vor, wenn der Besitzer eines oder mehrerer schon erworbener Geräte z.B. ein zu einem späteren Zeitpunkt erworbenes Gerät durch Kopieren der Software eines schon erworbenen Geräts benutzen könnte.

Der Hersteller der Geräte und der zugehörigen Software sw ist daher gezwungen, jedes einzelne zu einem Gerät gehörende Software-Paket mit einer Art von Einzel-Benutzungserlaubnis zu versehen. Es ist also erforderlich, das einzelne Gerät und die zu ihm "gehörende" Software so miteinander zu verknüpfen, daß ausschließlich diese beiden zusamenarbeiten können.

Entsprechend dem Verfahren der Erfindung wird dies wie folgt erreicht: Der Hersteller ordnet jedem Gerät g₁, g_{z} ein individuelles und Somit geräte-spezifisches Identifikationswort iw₁, iw_{z} derart zu, daß sich alle Identifikationswörter voneinander unterscheiden. Jedes geräte-spezifische Identifikationswort iw₁, iw_{z} wird in einem nichtflüchtigen Speicher m₁, m_{z} des jeweiligen Geräts g₁, g_{z} gespeichert.

Vom Hersteller wird ferner aus dem jeweiligen Identifikationswort iw₁, iw_{z} mittels eines Prozessors pz anhand eines nur ihm bekannten, geheimzuhaltenden und somit hier nicht offenzulegenden Verschlüsselungs-Algorithmus ein Schlüsselwort kw₁, kw_{z} gebildet und im zugehörigen Speicher m₁, m_{z} des jeweiligen Gerätes g₁, g_{z} ebenfalls gespeichert.

Zur Veranschaulichung möge ein Identifikationswort iw₁ und ein Identifikationswort iw_{z} in Dezimaldarstellung lauten: iw₁ = 123456; iw_{z} = 234561. Die Schlüsselwörter kw₁, kw_{z} könnten dann lauten: kw₁ = 132537495116, kw_{z} = 253749511671; diese sind dadurch gebildet worden, daß zwischen zwei benachbarten Ziffern deren Summe eingefügt worden ist.

Nach einer Weiterbildung der Erfindung ist es auch möglich, in das Schlüsselwort kw₁, kw_{z} ein Benutzungserlaubniswort mit einzubeziehen. Durch diesen "Einbau" können verschiedene Arten oder Grade von Benutzungserlaubnissen erteilt werden, die z.B. an der Komplexität der Datenverarbeitung der Software sw orientiert sind. Ist eine solche Staffelung nicht erforderlich, so stellt das mittels des Verschlüsselungs-Algorithmus gebildete Schlüsselwort selbst die Benutzungserlaubnis dar.

Als Verschlüsselungs-Algorithmus kann irgendein in der digitalen Verschlüsselungstechnik üblicher Algorithmus verwendet werden.

Die Identifikationswörter werden ferner zusammen mit dem zugehörigen jeweiligen Benutzungserlaubniswort in einer Datenbank db_{b} des Besitzers der Geräte und in einer Datenbank dbₕ des Herstellers der Software und der Geräte aufgelistet. Die Datenbank db_{b} des Besitzers der Geräte ist in der Figur separat dargestellt, jedoch selbstverständlich Bestandteil des Computers pc.

Da es sich bei der Datenbank db_{b} des Besitzers der Geräte und der Datenbank dbₕ des Herstellers der Software und der Geräte um zwei von einander unabhängige Datenbanken handelt, ist zwischen ihnen in der Figur keine Datenverbindung gezeichnet.

Bei jeder Inbetriebnahme eines der Geräte überprüft nun die Software sw, ob das im Speicher m₁, m_{z} dieses Geräts g₁, g_{z} abgelegte Identifikationswort iw₁, iw_{z} in der Datenbank db_{b} des Besitzers vorhanden ist. Wenn dies zutrifft, überprüft die Software sw anschließend, ob in der Datenbank db_{b} das zu diesem Identifikationswort gehörende Schlüsselwort kw₁, kw_{z} vorhanden ist.

Wenn dagegen das Identifikationswort iw₁, iw_{z} in der Datenbank db_{b} nicht vorhanden oder wenn das darin vorhandene Schlüsselwort falsch ist, überprüft die Software sw anschließend, ob im Speicher m₁, m_{z} des Geräts ein Schlüsselwort kw₁, kw_{z} abgelegt ist. Trifft dies zu, legt die Software sw das Schlüsselwort kw₁, kw_{z} zusammen mit seinem zugehörigen Identifikationswort iw₁, iw_{z} in der Datenbank db_{b} des Besitzers ab und gibt erst jetzt die Elektroniksteuerung des Gerätes und die Verarbeitung der Daten frei.

Trifft es dagegen nicht zu, daß im Speicher m₁, m_{z} des Geräts ein Schlüsselwort kw₁, kw_{z} abgelegt ist, erstellt die Software sw eine Fehlliste fl derjenigen Identifikationswörter iwₓ, iw_{y}, zu denen jeweils ein falsches Schlüsselwort gehört, und gibt die Elektroniksteuerung des Gerätes und die Verarbeitung der Daten nicht frei.

Die Fehlliste fl informiert den Besitzer der Geräte somit darüber, für welche Geräte er eine Benutzungserlaubnis noch erwerben muß. Die Fehlliste fl ist wieder Bestandteil des Computers pc. Sie kann in geeigneter Form an den Hersteller der Geräte übermittelt werden, um die fehlenden Benutzungserlaubnisse zu ordern.

Auch bei teilweisem oder vollständigem Datenverlust der Identifikations- und der Schlüsselwörter beim Besitzer ist die Fehlliste fl von Nutzen. In diesem Fall ermittelt der Hersteller der Sofware sw durch Vergleich der Fehlliste fl mit dem Inhalt seiner Datenbank dbₕ, für welche Geräte schon Benutzungserlaubnisse erworben worden waren, und erteilt diese dem Besitzer der Geräte erneut, jedoch z.B. kostenlos.

## Patentansprüche

1. Verfahren zum Schutz einer von einem Hersteller stammenden Software (sw) gegen unerlaubte Benutzung, welche Software
- aufgrund einer vom Hersteller erteilten Einzel-Benutzungserlaubnis für eine Elektroniksteuerung eines einzelnen von gleichartigen, vom Hersteller stammenden Geräten (g₁; g_{z}) eines Besitzers verwendbar ist,
- in einem Computer (pc) des Besitzers installiert ist und
- einer Verarbeitung von Daten (d) dient, die von den Geräten stammen,
welches Verfahren folgende Schritte umfaßt:
- jedem Gerät (g₁; g_{z}) wird vom Hersteller ein individuelles Identifikationswort (iw₁; iw_{z}) zugeordnet, das sich von den jeweiligen Identifikationswörtern aller anderen Geräte unterscheidet;
- das jeweilige Identifikationswort wird in einem nichtflüchtigen Speicher (m₁; m_{z}) des jeweiligen Geräts (g₁; g_{z}) gespeichert;
- vom Hersteller wird mittels eines Prozessors (pz) aus dem jeweiligen Identifikationswort anhand eines nur ihm bekannten Verschlüsselungs-Algorithmus ein Schlüsselwort (kw₁; kw_{z}) gebildet und im Speicher des jeweiligen Gerätes gespeichert;
- die Identifikationswörter werden zusammen mit dem zugehörigen jeweiligen Schlüsselwort in einer Datenbank (db_{b}) des Besitzers der Geräte und in einer Datenbank (dbₕ) des Herstellers der Software und der Geräte aufgelistet;
- bei jeder Inbetriebnahme eines der Geräte überprüft die Software,
-- ob das im Speicher dieses Geräts abgelegte Identifikationswort in der Datenbank des Besitzers vorhanden ist,
-- wenn dies zutrifft, ob in der Datenbank des Besitzers das zu diesem Identifikationswort gehörende Schlüsselwort vorhanden ist,
-- wenn dagegen das Identifikationswort in der Datenbank des Besitzers nicht vorhanden oder wenn das in der Datenbank des Besitzers vorhandene Schlüsselwort falsch ist, ob im Speicher des Geräts ein richtiges Schlüsselwort abgelegt ist;
- trifft dies zu, legt die Software das Schlüsselwort zusammen mit seinem zugehörigen Identifikationswort in der Datenbank des Besitzers ab und gibt die Elektroniksteuerung des Gerätes und die Verarbeitung der Daten frei;
- trifft dies dagegen nicht zu, erstellt die Software eine Fehlliste (fl) derjenigen Identifikationswörter (iwₓ; iw_{y}), zu denen jeweils ein falsches Schlüsselwort gehört, und gibt die Elektroniksteuerung des Gerätes und die Verarbeitung der Daten nicht frei.

2. Verfahren nach Anspruch 1, bei dem in das Schlüsselwort (kw₁; kw_{z}) ein Benutzungserlaubniswort aufgenommen wird.

3. Verfahren nach Anspruch 1 mit einer seriellen und/oder parallelen Schnittstelle zwischen den Geräten (g₁; g_{z}) und dem Computer (pc).

4. Verfahren nach Anspruch 1 mit einer manuell gesteuerten Datenübernahme aus den Geräten (g₁; g_{z}) in ein Hilfsgerät (hh).
